(19) Europäisches Patentamt
European Patent Office
Office européen des brevets

(11) EP 1 970 789 A2

(12) EUROPÄISCHE PATENTANMELDUNG

(43) Veröffentlichungstag:
17.09.2008 Patentblatt 2008/38

(51) Int Cl.:
*G05D 16/20* (2006.01)

(21) Anmeldenummer: 08004530.5

(22) Anmeldetag: 12.03.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(30) Priorität: 16.03.2007 DE 102007014238

(71) Anmelder: Voith Turbo H + L Hydraulic GmbH &
Co. KG
71273 Rutesheim (DE)

(72) Erfinder: Hermann, Jakob, Dr.
72135 Dettenhausen (DE)

(74) Vertreter: Dreiss, Fuhlendorf, Steimle & Becker
Patentanwälte
Postfach 10 37 62
70032 Stuttgart (DE)

(54) **Pneumatikregeleinrichtung und Verfahren hierfür**

(57) Pneumatikregeleinrichtung (10, 50, 110) zur Bereitstellung eines vorgebbaren Ansteuerluftdrucks ($p_{soll}$) in einer zu einem Verbraucher (A) führenden Verbraucherleitung (16, 99), mit einer Vorstufe (VS), die ein an eine Versorgungsleitung (P, 58) anschließbares, ansteuerbares Vorstufeneinlassventil (12, 54) zur Belüftung der Verbraucherleitung (16) und ein zwischen der Verbraucherleitung (16) und einer Entlüftung (R) liegendes, ansteuerbares Vorstufenablassventil (14, 56) aufweist, mit einer in der Verbraucherleitung (16) vorgesehenen Drosselstelle (18, 86), und mit einer Hauptstufe (HS), umfassend ein Hauptstufeneinlassventil (20, 89) und ein Hauptstufenablassventil (22, 81), die beide in Abhängigkeit eines aus der Differenz zwischen dem der Drosselstelle (18, 86) vorgeordneten Luftdruck ($p_1$) und dem der Drosselstelle (18, 86) nachgeordneten Luftdruck ($p_2$) gebildeten Steuerdrucks ($p_S$) druckansteuerbar derart ausgebildet sind, dass zum einen das Hauptstufeneinlassventil (20, 80) während einer Druckluftzufuhr zum Verbraucher (A) bei Überschreiten eines ersten Schwellwerts ($p_{S1}$) des Steuerdrucks ($p_S$) aus einer geschlossenen Normalstellung in eine Schnellbelüftungsstellung schaltet, in der die Versorgungsleitung (P, 58) unter Umgehung der Drosselstelle (18, 86) mit der Verbraucherleitung (16, 99) verbunden ist, wobei aufgrund des durch die Schnellbelüftung stattfindenden Druckausgleichs bei Unterschreiten des ersten Schwellwerts ($p_{S1}$) oder eines anderen Schwellwerts das Hauptstufeneinlassventil (20, 89) wieder schließt dass zum anderen das Hauptstufenablassventil (22, 81) während einer Druckluftabfuhr vom Verbraucher (A) bei Unterschreiten eines zweiten Schwellwerts ($P_{S2}$) des Steuerdrucks ($p_S$) aus einer geschlossenen Normalstellung in eine Schnellentlüftungsstellung schaltet, in der die Verbraucherleitung (16, 99) unter Umgehung der Drosselstelle (18, 86) mit der Entlüftung (R) verbunden ist, wobei aufgrund des durch die Schnellentlüftung stattfindenden Druckausgleichs bei Überschreiten des zweiten Schwellwerts ($p_{S2}$) oder eines anderen Schwellwerts das Hauptstufenablassventil (22, 81) wieder schließt.

Fig. 1

EP 1 970 789 A2

**Beschreibung**

Die Erfindung betrifft eine Pneumatikregeleinrichtung zur Bereitstellung eines vorgebbaren Ansteuerluftdrucks in einer zu einem Verbraucher führenden Verbraucherleitung. Die Erfindung betrifft zudem ein Verfahren zum Betreiben einer derartigen Pneumatikregeleinrichtung.

Solche Pneumatikregeleinrichtungen finden insbesondere dort Verwendung, wo ein insbesondere nicht konstanter Versorgungsluftdruck in einen vorgegebenen sich insbesondere über die Zeit ändernden Ansteuerluftdruck für einen Verbraucher umzuwandeln ist. Als Verbraucher kann insbesondere ein Retarder in Betracht kommen, der als verschleißlose Dauerbremse in Lastkraftwägen und Bussen vorgesehen sein kann. Derartige Retarder werden mit einem vorgebbaren, von der Betätigung der Bremse abhängigen Ansteuerluftdruck angesteuert, wobei über den vorgegebenen Ansteuerluftdruck beziehungsweise über eine entsprechende Luftmenge eine dazu proportionale Ölmenge in den Arbeitsraum des Retarders zwischen einem Rotor und einem Stator gedrängt wird. Je nach Ölmenge zwischen Rotor und Stator erfolgt dann eine Abbremsung des Rotors und damit des gesamten Fahrzeugs.

Gerade bei über einem Ansteuerluftdruck anzusteuernden Verbrauchern, die an Bord eines Fahrzeugs sind, muss zum einen der in der Regel stark schwankende Versorgungsdruck konstant und zum anderen abhängig von dem jeweils vorgegebenen Ansteuerluftdruck erhöht oder verringert werden. Insbesondere bei größeren Fahrzeugen werden Ansteuerluftdrücke bis zu 8 bar erreicht, wobei eine vergleichsweise genaue Regelung der Drücke insbesondere im Bereich von ± 0,1 bar möglich sein soll. Zudem soll in der Verbraucherleitung in vergleichsweise kurzer Zeit eine hohe Druckerhöhung beziehungsweise eine hohe Drucksenkung erzielbar sein, so dass der Verbraucher vergleichsweise schnell reagiert.

Der vorliegenden Erfindung liegt deshalb die Aufgabe zugrunde, eine Pneumatikregeleinrichtung der eingangs genannten Art bereitzustellen, die diesen Anforderungen gerecht wird. Zum einen soll auch bei vergleichsweise hohen Ansteuerluftdrücken, insbesondere bei 8 oder mehr bar, eine vergleichsweise genaue Regelung, insbesondere im Bereich von ± 0,1 bar, möglich sein, wobei ein schneller Druckaufbau und eine schnelle Druckentlastung ebenso möglich sein soll.

Diese Aufgabe wird mit einer Pneumatikregeleinrichtung mit den Merkmalen des Anspruchs 1 gelöst.

Eine derartige Pneumatikregeleinrichtung weist eine Vorstufe auf, die ein an eine Versorgungsleitung anschließbares, elektrisch ansteuerbares Vorstufeneinlassventil zur Belüftung der Verbraucherleitung und ein zwischen der Verbraucherleitung und einer Entlüftung liegendes, elektrisch ansteuerbares Vorstufenablassventil aufweist. Die Pneumatikregeleinrichtung sieht zudem eine Drosselstelle in der Verbraucherleitung vor sowie eine Hauptstufe, die ein Hauptstufeneinlassventil und ein Hauptstufenablassventil umfasst. Das Hauptstufeneinlassventil und das Hauptstufenablassventil sind beide in Abhängigkeit eines aus der Differenz zwischen dem der Drosselstelle vorgeordneten Luftdruck und dem der Drosselstelle nachgeordneten Luftdruck gebildeten Steuerdrucks druckansteuerbar ausgebildet.

Das Hauptstufeneinlassventil ist so ausgeführt, dass es während einer Druckluftzufuhr zum Verbraucher bei Überschreiten eines ersten Schwellwerts des Steuerdrucks aus einer geschlossenen Normalstellung in eine Schnellbelüftungsstellung schaltet, in der die Versorgungsleitung unter Umgehung der Drosselstelle mit der Verbraucherleitung verbunden ist, wobei aufgrund des durch die Schnellbelüftung stattfindenden Druckausgleichs bei Unterschreiten insbesondere des ersten Schwellwerts, oder eines anderen Schwellwerts, das Hauptstufeneinlassventil wieder schließt.

Das Hauptstufenablassventil ist demgegenüber derart ausgebildet, dass bei einer Druckluftabfuhr vom Verbraucher bei Unterschreiten eines zweiten Schwellwerts des Steuerdrucks es aus einer geschlossenen Normalstellung in eine Schnellentlüftungsstellung schaltet, in der die Verbraucherleitung unter Umgehung der Drosselstelle mit der Entlüftung verbunden ist. Findet aufgrund der Schnellentlüftung ein Druckausgleich statt und überschreitet dieser insbesondere den zweiten Schwellwert oder einen anderen Schwellwert, schließt das Hauptstufenablassventil wieder.

Eine derartige Regeleinrichtung hat den Vorteil, dass zum einen in der Normalstellung der Hauptstufe bei geschlossenem Hauptstufeneinlass- und -Ablassventil die Druckregelung über die Vorstufe sehr genau, insbesondere im Bereich von ± 0,1 bar, erfolgen kann.

Da nach einer erfolgten Schnellbelüftung das Hauptstufeneinlassventil aufgrund des stattfindenden Druckausgleichs wieder schließt, kann direkt im Anschluss an die Schnellbelüftung eine Feinregelung des Verbraucherdrucks auf dem höheren Druckniveau über eine entsprechende Ansteuerung der Vorstufe erfolgen.

Entsprechendes gilt auch für eine Schnellentlüftung. Da bei der Schnellentlüftung aufgrund des stattfindenden Druckausgleichs das Hauptstufenablassventil schließt, kann auch hier eine Feinregelung des Verbraucherluftdrucks auf dem geringerem Druckniveau ausschließlich über eine entsprechende Ansteuerung der Vorstufe erfolgen.

Grundsätzlich kann das Schließen des Hauptstufeneinlassventils bei einem vom ersten Schwellwert, bei dem das Hauptstufeneinlassventil geöffnet wird, verschiedenen Schwellwert erfolgen. Entsprechend kann grundsätzlich dass Hauptstufenablassventil bei einem vom zweiten Schwellwert, bei dem es geöffnet wird, verschiedenen Schwellwert geschlossen werden. In der Praxis hat sich allerdings als vorteilhaft herausgestellt, wenn das Schließen des jeweiligen Hauptstufenventils dann erfolgt, wenn der Schwellwert, bei dem es geöffnet wird, nach erfolgtem Druckausgleich wieder erreicht wird. Zur reinen Drucksteuerung des Hauptstufeneinlassventils kann dieses einen beidseitig druckbeaufschlagbaren Hauptstufenkolben aufweisen, der eine dem der Drosselstelle vorgeordneten Luftdruck zugeordnete erste Steuerfläche und eine dem der Drosselstelle nachgeordneten Luftdruck zugeordnete, kleiner als die erste Steuerfläche ausgebildete zweite Steuerfläche aufweist, wobei ein den Hauptstufenkolben mittelbar oder unmittelbar in Richtung der ersten Steuerfläche beaufschlagendes Federelement derart vorgesehen ist, dass der erste Schwellwert abhängig vom Quotienten der beiden Steuerflächen und der Federkraft des Federelements ist. Der erste Schwellwert ist dann folglich durch das Verhältnis der beiden Steuerflächen sowie durch die Federkraft des Federelements vorgegeben beziehungsweise einstellbar.

Ferner ist vorteilhaft, wenn das Hauptstufenablassventil zu dessen Drucksteuerung einen beidseitig druckbeaufschlagbaren Steuerkolben aufweist, der eine dem der Drosselstelle vorgeordneten Luftdruck zugeordnete, einen Steuerdruckraum begrenzende erste Steuerfläche und eine dem der Drosselstelle nachgeordnete zugeordnete, kleiner als die erste Steuerfläche ausgebildete zweite Steuerfläche aufweist, wobei der zweite Schwellwert abhängig vom Quotienten der beiden Steuerflächen ist. Über die Auslegung der Geometrie der Steuerflächen kann folglich der zweite Schwellwert des Steuerdrucks vorgegeben werden. Fällt der Druck auf dem der Drosselstelle vorgeordneten Seite gegenüber dem der Drosselstelle nachgeordneten Seite um den zweiten Schwellwert ab, so wird aufgrund des Überschreitens des zweiten Schwellwerts der Steuerkolben betätigt, wodurch Luft aus der Verbraucherleitung unter Umgehung der Drosselstelle abströmen kann. Vorteilhafterweise ist der zweite Schwellwert kleiner oder gleich dem Produkt des jeweiligen der Drosselstelle vorgeordneten Luftdrucks mit k - 1, wobei k der Quotient aus der größeren Steuerfläche und der kleineren Steuerfläche des Steuerkolbens ist; das heißt:

$$p_{s2} \leq p_1(k-1),$$

wobei $p_1$ der jeweilige vor der Drosselstelle herrschende Luftdruck ist.

Um zu gewährleisten, dass auch bei maximalem Verbraucherdruck das Hauptstufenauslassventil geschlossen bleibt, kann vorgesehen sein, dass die Differenz der beiden für den Steuerkolben maßgeblichen Steuerflächen kleiner oder zumindest gleich ist als der Quotient aus der Federkraft des Federelements und des maximal zulässigen Verbraucherdrucks. Wird die dem der Drosselstelle vorgelagerten Luftdruck zugeordnete Steuerfläche mit $F_1$ bezeichnet und die dem der Drosselstelle nachgeordneten Luftdruck zugeordnete zweite Steuerfläche mit $F_2$ bezeichnet, die Federkraft des Federelements mit $F_s$ und der maximal zulässige Verbraucherdruck mit $p_{max}$ bezeichnet, so gilt vorzugsweise:

$$F_1 - F_2 \leq F_s/p_{max}.$$

Ferner ist vorteilhaft, wenn eine elektronische Steuereinheit vorgesehen ist, die in Abhängigkeit des jeweils vorgegebenen Ansteuerluftdrucks und des der Drosselstelle nachgeordneten Verbraucherleitungsdruck das Einlassventil und das Ablassventil ansteuert. Über eine derartige Steuereinheit kann folglich ein Abgleich zwischen dem Soll-Wert (vorgegebener Ansteuerluftdruck) und dem Ist-Wert (Verbraucherleitungsdruck) erfolgen.

Gemäß einer weiteren Ausgestaltung der Erfindung ist vorgesehen, dass der Steuerkolben und der Hauptstufenkolben in einem gemeinsamen Zylinderraum, der allerdings unterschiedliche Geometrien und/oder Durchmesser aufweisen kann, axial hintereinander angeordnet sind, wobei der Steuerkolben einen zwischen seinen beiden Steuerflächen die Drosselstelle bildenden Durchbruch aufweist und wobei der Hauptstufenkolben, der zur Verbindung mit der Verbraucherleitung hohl ausgebildet ist, vom Federelement axial gegen den Steuerkolben beaufschlagt derart angeordnet ist, dass er den Hauptstufenkolben bei Überschreiten des ersten Schwellwerts entgegen der Federkraft des Federelements aus der Normalstellung in die Schnellbelüftungsstellung betätigt. Die für den Hauptstufenkolben maßgebliche, der Drosselstelle vorgelagerte Steuerfläche, wird bei dieser Ausführungsform von der der Drosselstelle vorgelagerten Steuerfläche des Steuerkolbens gebildet. Aufgrund der axialen Bewegung des Steuerkolbens bei Druckanstieg im Steuerdruckraum über den ersten Schwellwert wird folglich der Hauptstufenkolben vom Steuerkolben betätigt, wodurch das Hauptstufeneinlassventil geöffnet wird.

Der Hauptstufenkolben ist dabei vorzugsweise derart angeordnet, dass er in der Schnellbelüftungsstellung einen in der Normalstellung geschlossenen, zum Verbraucher führenden und die Drosselstelle umgehenden Verbraucherleitungsstrang öffnet.

Eine weitere vorteilhafte Ausgestaltung der Erfindung ergibt sich dann, wenn der Steuerkolben bei Unterschreiten des zweiten Schwellwerts sich in die dem Steuerdruckraum zugewandte Richtung in die Schnellentlüftungsstellung bewegt, wobei ein Anschlag vorgesehen ist, der die Bewegung des Hauptstufenkolbens in Richtung zum Steuerdruckraum hin derart begrenzt, dass der Steuerkolben vom Hauptstufenkolben abhebt und Druckluft zwischen dem Steuerkolben und dem Hauptstufenkolben aus dem Innenraum des Hauptstufenkolbens, und damit aus der Verbraucherleitung, in eine Entlüftungsleitung abströmen kann. Wie bereits ausgeführt, wird der zweite Schwellwert folglich dann erreicht, wenn das Produkt des Luftdrucks auf der der Drosselstelle nachgelagerten Seite und der zugehörigen Steuerfläche des Steuerkolbens höher ist als das Produkt des Luftdrucks auf der der Drosselstelle vorgelagerten Seite mit der zugehörigen Steuerfläche des Steuerkolbens. Bei Unterschreiten des zweiten Schwellwerts bewegt sich folglich der Steuerkolben in Richtung Steuerdruckraum. Wegen des Anschlags kann der Hauptstufenkolben der Bewegung des Steuerdruckkolbens aus seiner Normalstellung in die Schnellentlüftungsstellung nicht folgen. Durch das Abheben des Steuerkolbens vom Hauptstufenkolben kann folglich zur Schnellentlüftung Luft aus der Verbraucherleitung abströmen.

Besonders vorteilhaft ist, wenn der Verbraucherleitungsstrang aufgrund des Anliegens des Hauptstufenkolbens am Anschlag verschlossen ist und beim Abheben des Hauptstufenkolbens vom Anschlag geöffnet ist. Der Anschlag hat damit eine Doppelfunktion; zum einen dient er zur axialen Bewegungsbegrenzung des Hauptstufenkolbens und zum anderen zum Öffnen beziehungsweise Verschließen des die Versorgungsleitung mit der Verbraucherleitung verbindenden Verbraucherleitungsstrangs.

Bei einer weiteren vorteilhaften Ausführungsform ist nicht nur das Hauptstufeneinlass- und das Hauptstufenablassventil axial nebeneinander angeordnet, sondern auch das Vorstufeneinlassventil und Vorstufenablassventil.

Vorzugsweise sind sämtliche Ventile in einem gemeinsamen, ein- oder mehrteilig ausgebildeten Gehäuse untergebracht.

Gemäß einer vorteilhaften Ausgestaltung der Erfindung ist zur wenigstens weitgehenden luftdichten Abdichtung zwischen dem Steuerkolben und der Oberfläche des Zylinderraums wenigstens eine Ring- oder Membrandichtung vorgesehen. Insbesondere das Vorsehen einer Membrandichtung hat den Vorteil, dass eine effektive Abdichtung erreichbar ist, da die Dichtung fest an den relativ zueinander bewegten Teilen angeordnet ist.

Um eine vergleichsweise genaue Druckeinstellung in der Verbraucherleitung zu ermöglichen, ist vorteilhaft, wenn das Einlassventil und das Ablassventil der Vorstufe als gepulst ansteuerbare Ventile ausgebildet sind. Durch die gepulste Ansteuerung kann der Druck in der Verbraucherleitung schrittweise erhöht beziehungsweise gesenkt werden, bis der vorgegebene Ansteuerluftdruck erreicht ist. Die Ventile sind dabei vorzugsweise elektromagnetisch ansteuerbar, wobei das Einlassventil in seiner Ruheposition, also bei nicht aktiver Ansteuerung, geschlossen und das Ablassventil geöffnet ist. Hierdurch wird erreicht, dass im Nichtbetrieb der Pneumatikregeleinrichtung die Versorgungsleitung entlüftet ist.

Vorzugsweise ist das Vorstufenablassventil zudem als elektrisch betätigbares Druckbegrenzungsventil ausgebildet, mit dem ein maximal zulässiger Verbraucherleitungsdruck begrenzt wird. Hierdurch kann gewährleistet werden, dass in der Verbraucherleitung kein unzulässig hoher Druck auftritt, der zu einer Beschädigung des Verbrauchers führen könnte.

Die eingangs genannte Aufgabe wird auch gelöst durch ein Verfahren zum Betreiben einer erfindungsgemäßen Pneumatikregeleinrichtung in einem Normalbetriebsmodus, in dem das Vorstufeneinlassventil und/ oder das Vorstufenablassventil in Abhängigkeit von dem vorgegebenen Ansteuerluftdruck und dem der Drosselstelle nachgeordneten, in der Verbraucherleitung herrschenden Verbraucherleitungsdruck angesteuert wird, das sich wie folgt kennzeichnet:

- Zur Druckluftzufuhr zum Verbraucher wird das Vorstufeneinlassventil bei geschlossenem Ablassventil insbesondere gepulst angesteuert,
- zur Druckluftabfuhr vom Verbraucher wird das Vorstufenablassventil bei geschlossenem Vorstufeneinlassventil insbesondere gepulst angesteuert,
- bei Überschreiten des ersten Schwellwerts des Steuerdrucks wird zur Schnellbelüftung der Verbraucherleitung die Versorgungsleitung unter Umgehung der Drosselstelle mit der Verbraucherleitung verbunden,
- bei Unterschreiten des zweiten Schwellwerts des Steuerdrucks wird zur Schnellentlüftung der Verbraucherleitung die Verbraucherleitung unter Umgehung der Drosselstelle mit der Entlüftung verbunden.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:

Figur 1  eine schematische Darstellung einer erfindungsgemäßen Pneumatikregeleinrichtung;

Figur 2  einen Längsschnitt einer ersten Ausführungsform einer erfindungsgemäßen Pneumatikregeleinrichtung in der Normalstellung;

Figur 3  die Einrichtung gemäß Figur 2 in der Schnellbelüftungsstellung;

Figur 4  die Einrichtung gemäß Figur 3 in der Schnellentlüftungsstellung; und

Figur 5  einen Längsschnitt durch eine zweite erfindungsgemäße Pneumatikregeleinrichtung.

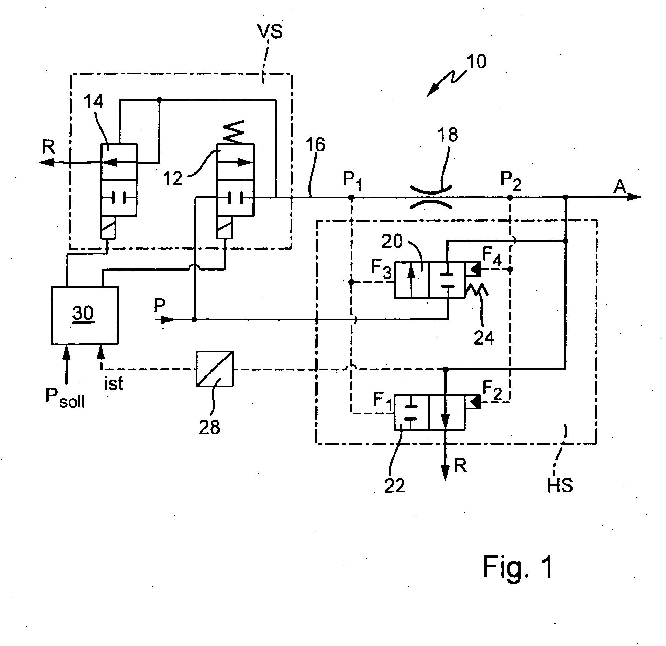

Wie aus dem in der Figur 1 dargestellten Schaltplan einer Pneumatikregeleinrichtung 10 hervorgeht, umfasst die Pneumatikregeleinrichtung 10 eine Vorstufe VS und eine der Vorstufe nachgelagerte Hauptstufe HS. Die Vorstufe VS als solche wird von einem Vorstufeneinlassventil 12 und einem Vorstufenablassventil 14 gebildet. Das Vorstufeneinlassventil 12 ist an eine Druckluftversorgung P angeschlossen und versorgt im geöffneten Zustand eine zu einem Verbraucher A führende Verbraucherleitung 16. Das Vorstufenablassventil 14 verbindet in geöffnetem Zustand die Verbraucherleitung 16 mit einer Entlüftung R.

In der Verbraucherleitung 16 ist eine Drosselstelle 18 vorgesehen, wobei der vor der Drosselstelle 18 herrschende Druck in der Verbraucherleitung mit $p_1$ und der der Drosselstelle 18 nachgelagerte Druck mit $p_2$ bezeichnet wird.

Die Hauptstufe HS umfasst ihrerseits ein Hauptstufeneinlassventil 20 sowie ein Hauptstufenablassventil 22. Beide Ventile 20, 22 sind rein druckgesteuerte Ventile, die in Abhängigkeit eines aus dem Differenzdruck zwischen dem der Drosselstelle 18 vorgelagerten Luftdruck $p_1$ und dem der Drosselstelle 18 nachgelagerten Luftdruck $p_2$ gebildeten Steuerdruck $p_s$ ($p_s = p_1 - p_2$) schalten.

In der Figur 1 ist die Pneumatikregeleinrichtung 10 in Ruhestellung dargestellt, in der nicht nur den der Drosselstelle 18 vorgelagerte Verbraucherleitungsstrang entlüftet, sondern auch der der Drosselstelle 18 nachgelagerte Verbrauchungsleiterstrang entlüftet ist.

Das Hauptstufeneinlassventil 20, das in seiner Normalstellung geschlossen ist, schaltet bei Überschreiten eines ersten Schwellwerts $P_{S1}$ aus seiner geschlossenen Normalstellung in eine Schnellbelüftungsstellung, in der die Versorgung P unter Umgehung der Drosselstelle 18 mit dem der Drosselstelle 18 nachgelagerten Abschnitt der Verbraucherleitung 16 verbunden wird. Der erste Schwellwert $P_{S1}$ ist dabei insbesondere abhängig von der Größe einer ersten Steuerfläche $F_3$ des Ventils 20, die dem der Drosselstelle 18 vorgelagerten Luftdruck $p_1$ zugeordnet ist, der Größe einer zweiten Steuerfläche $F_4$ des Ventils 20, die dem der Drosselstelle 18 nachgelagerten Luftdruck $p_2$ zugeordnet ist, sowie der Federkraft $F_S$ eines Federelements 24, welches das Hauptstufeneinlassventil 20 in seine verschlossene Normalstellung drängt.

Das parallel zum Hauptstufeneinlassventil 20 geschaltete Hauptstufenablassventil 22, das in seiner Normalstellung geschlossen ist, verbindet in seiner geöffneten Schnellentlüftungsstellung die der Drosselstelle 18 nachgelagerten Verbraucherleitung 16 mit einer Entlüftung R. Das Hauptstufenablassventil 22 weist eine dem Verbraucherleitungsluftdruck $p_1$ zugeordnete Steuerfläche $F_1$ und eine dem Verbraucherleitungsdruck $p_2$ zugeordnete Steuerfläche $F_2$ auf, die kleiner als die Steuerfläche $F_1$ ausgebildet ist, auf. Aufgrund der unterschiedlich groß gewählten Steuerflächen $F_1$ und $F_2$ wird ein zweiter Schwellwert $p_{s2}$ des Steuerdrucks $p_s$ vorgegeben, bei dessen Überschreiten das Hauptstufenablassventil 22 geschlossen beziehungsweise bei dessen Unterschreiten das Hauptstufenablassventil 22 geöffnet wird.

Die Einrichtung 10 umfasst ferner einen den der Drosselstelle 18 nachgelagerten Verbraucherleitungsdruck $p_2$ erfassenden Drucksensor 28, der den jeweiligen Ist-Wert einer Steuereinheit 30 mitteilt. Die Steuereinheit 30 steuert dann in Abhängigkeit des gemessenen Drucks $p_2$ und in Abhängigkeit der Regelgröße des vorgegebenen Ansteuerluftdrucks $p_{soll}$ das Einlassventil 12 und das Ablassventil 14 derart an, dass in der Verbraucherleitung im Idealfall der jeweils vorgegebene Ansteuerluftdruck $p_{soll}$ zur Ansteuerung des Verbrauchers A herrscht.

Mit der Einrichtung 10 kann folglich auch bei stark schwankendem Eingangsdruck der Druckluftversorgung ein weitgehend konstanter und in Abhängigkeit des vorgegebenen Ansteuerluftdrucks $p_{soll}$ änderbarer Versorgungsleitungsluftdruck $p_2$ für den Verbraucher zur Verfügung gestellt werden.

Im Normalbetrieb, bei dem der jeweilige Ist-Luftdruck $p_2$ in der Verbraucherleitung bekannt ist, wird zur Druckerhöhung in der Verbraucherleitung 16 das Ablassventil 14 geschlossen und das Einlassventil insbesondere gepulst so lange angesteuert, bis der vorgegebene Ansteuerluftdruck $p_{soll}$ in der Verbraucherleitung erreicht ist. Zur Verminderung des Luftdrucks $p_2$ in der Verbraucherleitung 16 wird das Einlassventil 12 geschlossen und das Ablassventil 14 insbesondere gepulst derart angesteuert, bis der jeweils gewünschte Verbraucherleitungsluftdruck vorherrscht. Auf diese Art und Weise kann der Verbraucherleitungsluftdruck $p_2$ sehr genau, insbesondere im Bereich von 0,1 bar, eingestellt werden.

Tritt nun der Fall auf, dass insbesondere aufgrund der Regeleingangsgröße $p_{soll}$ der Druck in der Verbraucherleitung 16 stark ansteigen soll, so erhöht sich der der Drosselstelle 18 vorgelagerte Luftdruck $p_1$ aufgrund einer entsprechenden Ansteuerung des Eingangsventils 12 gegenüber dem der Drosselstelle 18 nachgelagerten Luftdruck $p_2$ stark.

Bei Überschreiten des Schwellwerts $p_{s1}$ schaltet dann das Einlassventil 20 der Hauptsegment HS aus der geschlossenen Normalstellung in die Schnellbelüftungsstellung. Aufgrund der Umgehung der Drosselstelle 18 findet eine rasche Druckerhöhung in der der Drosselstelle 18 nachgelagerten Verbraucherleitung 16 statt. Einher geht der Abfall der Druckdifferenz zwischen $p_1$ und $p_2$; wird der Schwellwert $p_{s1}$ wieder unterschritten, so schaltet das Hauptstufeneinlassventil 20 in seine geschlossene Normalstellung zurück. Eine Feineinstellung des Drucks $p_2$ kann dann über die insbesondere schrittweise Erhöhung oder Senkung des Drucks $p_1$ mittels der Vorstufe VS erfolgen.

Da beim Belüften der Verbraucherleitung 16 der Druck $p_1$ stets größer ist als der Druck $p_2$, befindet sich das Hauptstufenablassventil 200 in seiner geschlossenen Stellung. Selbst dann, wenn der Luftdruck $p_1$ geringfügig unter dem Luftdruck $p_2$ liegt, ist das Hauptstufenablassventil 22 geschlossen, da die Schaltfläche $f_1$ größer ausgebildet ist als die Schaltfläche $f_2$.

Soll nun der Luftdruck $p_2$ aufgrund der vorgegebenen Regeleingangsgröße $p_{soll}$ vergleichsweise schnell gesenkt werden, so fällt aufgrund des geschlossenen Einlassventils 12 und des entsprechend langen beziehungsweise häufigen Öffnens des Ablassventils 14 der der Drosselstelle 18 vorgelagerte Luftdruck $p_1$ stark ab. Beim Abfallen des Luftdrucks $p_1$ unter den zweiten Schwellwert $p_{s2}$, der vom Quotienten der Schaltfläche $F_1$ zur Schaltfläche $F_2$ abhängig ist, schaltet dann das Hauptstufenablassventil 22 in die Schnellentlüftungsstellung, in der aus der der Drosselstelle nachgelagerten Verbraucherleitung 16 Luft unter Umgehung der Drosselstelle 18 direkt zur Entlüftung R abströmen kann. Aufgrund des damit einhergehenden Druckausgleichs vor der Drosselstelle und nach der Drosselstelle schließt das Ablassventil 22, sobald der zweite Schwellwert $p_{s2}$ wieder überschritten wird. Bei geschlossenem Ablassventil 22 und auch geschlossenem Einlassventil 20 kann dann über die Drosselstelle 18 eine Feinregelung des Drucks $p_2$ in der Verbraucherleitung 16 durch entsprechendes Ansteuern des Einlassventils 12 beziehungsweise des Ablassventils 14 erreicht werden.

Mit der beschriebenen Einrichtung 10 kann folglich zum einen ein sehr fein einstellbarer Verbraucherleitungsdruck $p_2$ zur Verfügung gestellt werden und zum anderen kann trotzdem eine schnelle Belüftung beziehungsweise Entlüftung und damit ein schneller Druckanstieg beziehungsweise Druckabfall des Verbraucherleitungsdrucks $p_2$ realisiert werden.

Um ein zu insbesondere am Verbraucher A zu Beschädigungen führenden unzulässigen Überdruck im System zu unterbinden, ist das Ablassventil 14 zudem als Druckbegrenzungsventil ausgebildet. Das Einlassventil 14 öffnet selbsttätig dann, wenn der maximal zulässige Verbraucherleitungsdruck, der insbesondere im Bereich von 8 bar liegen kann, erreicht wird.

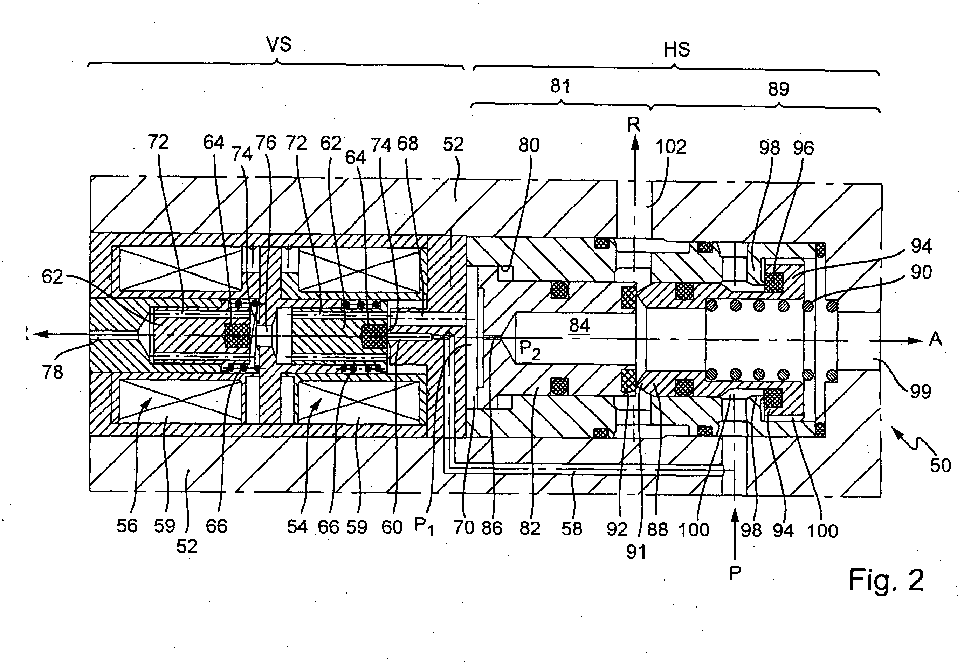

In den Figuren 2 - 4 sind verschiedene Schaltstellungen einer Pneumatikregeleinrichtung 50 gezeigt, die gemäß dem in der Figur 1 dargestellten Schema arbeitet.

Die Pneumatikregeleinrichtung 50 umfasst ein Gehäuse 52, in dem die Vorstufe VS mit dem Vorstufeneinlassventil 54 und axial daneben dem Vorstufenablassventil 56 angeordnet ist. Das Einlassventil 54 und das Ablassventil 56 sind jeweils über Magnete 59 separat voneinander ansteuerbar. Zum Einlassventil 54 führt eine von einer Druckversorgung P kommende Versorgungsleitung 58. Das dem Einlassventil 54 zugewandte freie Ende 60 der Versorgungsleitung 58 bildet einen Ventilsitz 74, der in der in der Figur 2 dargestellten Lage von einem axial bewegbaren Ventilkörper 62 beziehungsweise von einem in den Ventilkörper 62 eingelassenen Dichtelements 64 verschlossen wird.

Bei Ansteuerung des Magnets 59 des Einlassventils 54 wird folglich der Ventilkörper 60 entgegen der Federkraft einer Ventilfeder 66 derart bewegt, dass er das freie Ende 60 der Versorgungsleitung 58 freigibt. Bei geöffnetem Einlassventil 54 kann dann die von der Druckluftversorgung P kommende Druckluft über eine Verbindungsleitung 68 in einen Steuerdruckraum 70 strömen. Der Steuerdruckraum 17 ist zudem über die Verbindungsleitung 68 und über in dem Ventilkörper 62 vorgesehene Axialbohrungen 72 über das Ablassventil 56 mit der Entlüftung R verbunden. Das Ablassventil 56 ist prinzipiell gleich aufgebaut wie das Einlassventil 54. Es sieht ebenfalls einen Ventilkörper 60 mit einem Dichtelement 64 vor, das in der geschlossenen Stellung gegen einen Ventilsitz 74 wirkt. Auch der Ventilkörper 60 des Ablassventils 56 ist federbeaufschlagt - allerdings wird er nicht, wie beim Einlassventil 54 in die geschlossene, sondern in die geöffnete Stellung gedrängt - und durch den zugehörigen Elektromagneten 59 ansteuerbar. Der Ventilkörper 60 des Ablassventils 54 sieht ebenfalls in axialer Richtung verlaufende Bohrungen 72 vor, welche bei geöffnetem Ablassventil eine Axialverbindung 76 zwischen dem Einlassventil 54 und dem Ablassventil 56 mit der Entlüftung R verbindet.

Die Federelemente 66 sind am Einlassventil 54 und am Ablassventil 56 derart angebracht, dass in einer nicht bestromten Stellung der Ventile, wie sie in der Figur 2 dargestellt ist, das Einlassventil 54 geschlossen ist und das Ablassventil 56 geöffnet ist. Folglich kann in dieser Stellung Luft aus dem Steuerdruckraum 70 über die Verbraucherleitung 68, die Axialbohrung 72 des Ventilkörpers 60 des Einlassventils 54, die Axialverbindung 76, den Ventilsitz 74 des Ablassventils 56, die Axialbohrungen 72 des Ablassventils 56 und über eine Entlüftungsleitung 78 hin zur Entlüftung R abströmen.

Auf der dem Einlassventil 54 abgewandten Seite der Verbindungsleitung 68 ist eine Hauptstufe HS vorgesehen, die einen in einem Zylinderraum 80 verschieblich gelagerten, den Steuerdruckraum 70 begrenzenden Steuerkolben 82 eines Hauptstufenablassventils 81 umfasst. Der Steuerkolben 82 weist dabei einen in axialer Richtung verlaufenden Durchbruch 84 mit einer eine Drosselstelle 86 bildenden Engstelle auf. Auf der dem Steuerdruckraum 70 abgewandten Seite des Steuerkolbens 82 ist ein ebenfalls in axialer Richtung verschieblich gelagerter Hauptstufenkolben 88 eines Hauptstufeneinlassventils 89 angeordnet. Der Hauptstufenkolben 88 ist hohl ausgebildet und verbindet den Innenraum 84 des Steuerkolbens 82 mit einer zum Verbraucher A führenden Verbraucherleitung 99. Der Hauptstufenkolben 88 wird von einem sich am Gehäuse 52 abstützenden Federelement 90 in Richtung Steuerkolben 82 beaufschlagt. In der in der Figur 2 dargestellten Schaltstellung liegt die dem Steuerkolben 82 zugewandten Stirnseite 91 des Hauptstufenkolbens 88 an einem im Steuerkolben 82 eingelassenen Dichtelement 92 luftdicht an, so dass keine im Innern des Steuerkolbens 82 beziehungsweise des Hauptstufenkolbens 88 vorhandene Luft zwischen dem Steuerkolben 82 und dem Hauptstufenkolben 88 nach radial außen abströmen kann.

Der Hauptstufenkolben 88 sieht auf seiner dem Steuerkolben 82 abgewandten Seite eine umlaufende Schulter 94 vor, an der ein umlaufendes Dichtelement 96 eingelassen ist. Dieses Dichtelement 96 wirkt in der in der Figur 2 dargestellten Lage aufgrund der Federvorspannung des Federelements 90 luftdicht gegen einen gehäuseseitigen Anschlag 98. Hierdurch wird ein von der Druckluftversorgung P kommender, unter Umgehung der Drosselstelle 86 in die zum Verbraucher A führende Verbraucherleitung 99 mündender Verbraucherleitungsstrang 100 verschlossen.

In der Figur 2 befindet sich die Hauptstufe HS beziehungsweise befinden sich die beiden Hauptstufenventil 81 und 89 in einer geschlossenen Normalstellung $S_1$, in der der Verbraucherleitungsdruck über das Ansteuern des Einlassventils 54 beziehungsweise des Ablassventils 56 fein einstellbar ist.

Zur Druckerhöhung des Verbraucherleitungsdrucks $p_2$ wird das Einlassventil 54 bei geschlossenem Ablassventil 56 vorzugsweise gepulst angesteuert. Durch die Pulsung kann der Druck $p_1$ im Steuerdruckraum 70 sowie der Druck $p_2$ auf der der Drosselstelle 86 nachgelagerten Seite der Verbraucherleitung 99 fein dosiert erhöht werden. Zur Druckabsenkung des Drucks $p_2$ in der Verbraucherleitung 99 wird das Einlassventil 54 geschlossen und das Ablassventil 56 insbesondere derart gepulst angesteuert, dass der Druck fein dosiert abfällt. Der Steuerkolben 82 sowie der Hauptstufenkolben 88 befindet sich dabei in der in der Figur 2 dargestellten geschlossenen Normalstellung.

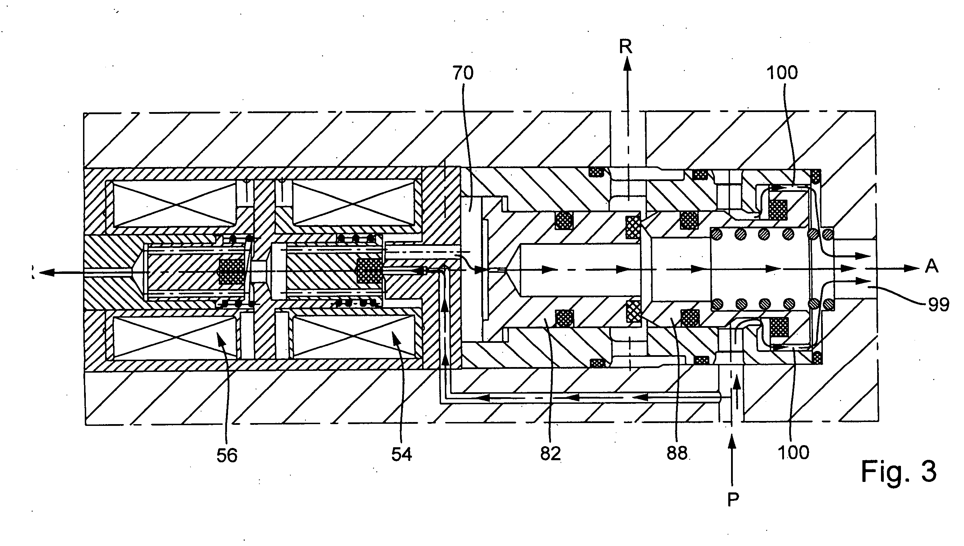

Tritt nun der Fall auf, dass zur Ansteuerung des Verbrauchers A in kurzer Zeit ein hoher Ansteuerluftdruck in der Verbraucherleitung 99 zur Verfügung gestellt werden soll, so wird das Einlassventil 54 bei geschlossenem Ablassventil 56 derart angesteuert, dass im Steuerdruckraum 70 der dort vorhandene Luftdruck $p_1$ stark ansteigt. Aufgrund der Drosselstelle 86 kann auf der der Drosselstelle nachgelagerten Seite der Luftdruck $p_2$ nur verzögert ansteigen. Bei Erreichen eines ersten Schwellwertes $P_{S1}$ der Luftdruckdifferenz zwischen dem der Drosselstelle 68 vorgelagerten Luftdruck $p_1$ und dem der Drosselstelle 86 nachgelagerten Luftdruck $p_2$ wird der Steuerkolben 82 samt Hauptstufenkolben 88 entgegen der Federkraft $F_S$ der Feder 90 in axialer Richtung derart bewegt, dass die Schulter 94 beziehungsweise das Dichtelement 92 vom Anschlag 98 abhebt und der Verbraucherleitungsstrang 100 geöffnet wird. Das Hauptstufeneinlassventil 81 schaltet in die in der Figur 3 dargestellte Schnellbelüftungsstellung. Druckluft kann dann von der Druckluftversorgung P über den Verbraucherleitungsstrang 100 unter Umgehung der Drosselstelle 86 direkt in die Verbraucherleitung 99 einströmen. Damit ist ein schneller Druckanstieg in der Verbraucherleitung 99 verbunden.

Der erste Schwellwert $p_{S1}$ des Steuerdrucks ist dabei insbesondere über die Federkraft $F_S$ des Federelements 90 und der für den Hauptstufenkolben 88 maßgeblichen Schaltflächen einstellbar. Da der Hauptstufenkolben 88 über den Steuerkolben 82 in seine Öffnungsstellung bewegt wird, ist die für den Hauptstufenkolben 88 dem Luftdruck $p_1$ zugewandte maßgebliche Schaltfläche die Schaltfläche $F_1$ des Steuerkolbens 82. Die für den der Drosselstelle 86 nachgelagerten Luftdruck $p_2$ maßgebliche Schaltfläche des Hauptstufenkolbens 88 ist in der Figur 2 mit $F_3$ bezeichnet. Der erste Schwellwert $p_{S1}$ ist folglich abhängig vom Quotienten k

= $F_1/F_3$ sowie von der Federkraft $F_S$ des Federelements 90.

Aufgrund des Öffnens des Hauptstufeneinlassventils 89 findet sehr schnell ein Druckluftausgleich zwischen dem der Drosselstelle 86 vorgelagerten Druck $p_1$ und dem der Drosselstelle 86 nachgelagerten Druck $p_2$ statt. Unterschreitet der Differenzdruck den ersten Schwellwert $p_{S1}$, so schließt das Hauptstufeneinlassventil 89 selbsttätig und es kann, wie beschrieben, eine Feineinstellung des Verbraucherleitungsdrucks $p_2$ über die Drosselstelle 86 erfolgen.

Für den Fall, dass die Versorgungsleitung 99 schnell entlüftet werden soll, wird das Einlassventil 54 geschlossen und das Ablassventil so angesteuert, dass in dem Steuerdruckraum 70 ein starker Druckabfall durch entsprechendes Öffnen des Ablassventils 56 stattfindet.

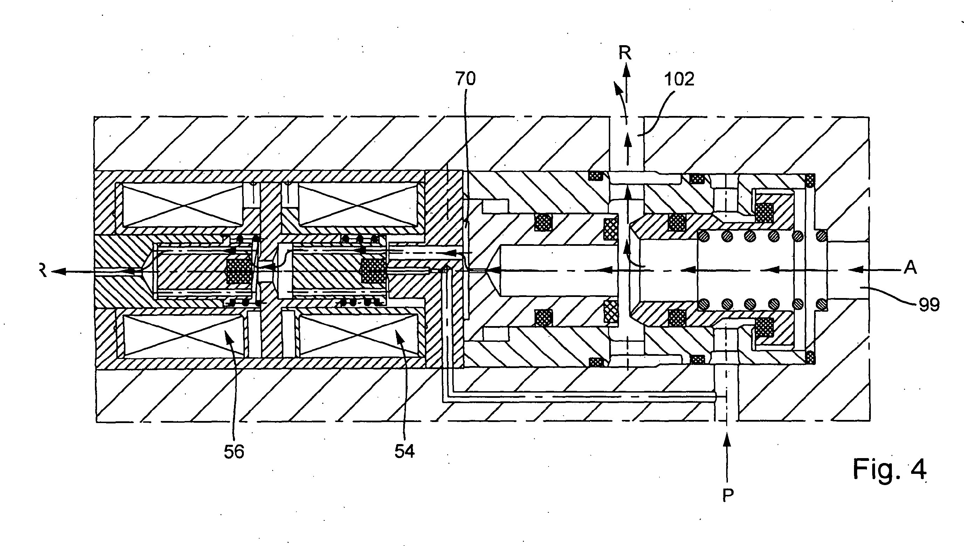

Fällt der Differenzdruck $p_1$- $p_2$ unter den zweiten Schwellwert $p_{S2}$, dann bewegt sich der Steuerkolben 82 in axialer Richtung hin zum Einlassventil 54; das Hauptstufenablassventil 81 schaltet in die geöffnete Schnellentlüftungsstellung, wie sie in Figur 4 dargestellt ist.

Das Dichtelement 92 hebt von der Stirnseite 91 des Hauptstufenkolben 88 ab, wodurch Luft aus der Verbraucherleitung 99 zwischen dem Steuerkolben 82 und dem Hauptstufenkolben 88 nach radial außen in einen Entlüftungsstrang 102, wie in der Figur 4 dargestellt, abströmen kann.

Wird aufgrund des in der Schnellentlüftungsstellung stattfindenden Druckausgleichs der zweite Schwellwert $p_{s2}$ wieder überschritten, so schaltet das Hauptstufenablassventil 81 wieder in seine geschlossene Normalstellung. Eine Feineinstellung des Verbraucherleitungsdrucks $p_2$ kann dann über die Vorstufe VS beziehungsweise die Drosselstelle 86 erfolgen.

Der zweite Steuerdruck $p_{s2}$ ergibt sich aus dem Quotienten der dem Steuerraum 70 zugewandten Steuerfläche $F_1$ und dem der Drosselstelle 86 abgewandten, kleineren Steuerfläche $F_2$ des Steuerkolbens 82, wobei insbesondere gilt: $p_{S2} \leq p_1 (F_1/F_2 - 1)$.

Wie zur Figur 1 erläutert, werden bei der Ausführungsform gemäß den Figuren 2 - 4 das Einlassventil 54 und das Ablassventil 56 in Abhängigkeit von dem in der Verbraucherleitung 99 herrschenden Verbraucherleitungsdruck $p_2$ und in Abhängigkeit der Regelgröße $p_{soll}$ angesteuert. Der Verbraucherleitungsdruck $p_2$ wird dabei über einen Druckmesser, wie in der Figur 1 mit dem Bezugszeichen 28 versehen ist, gemessen.

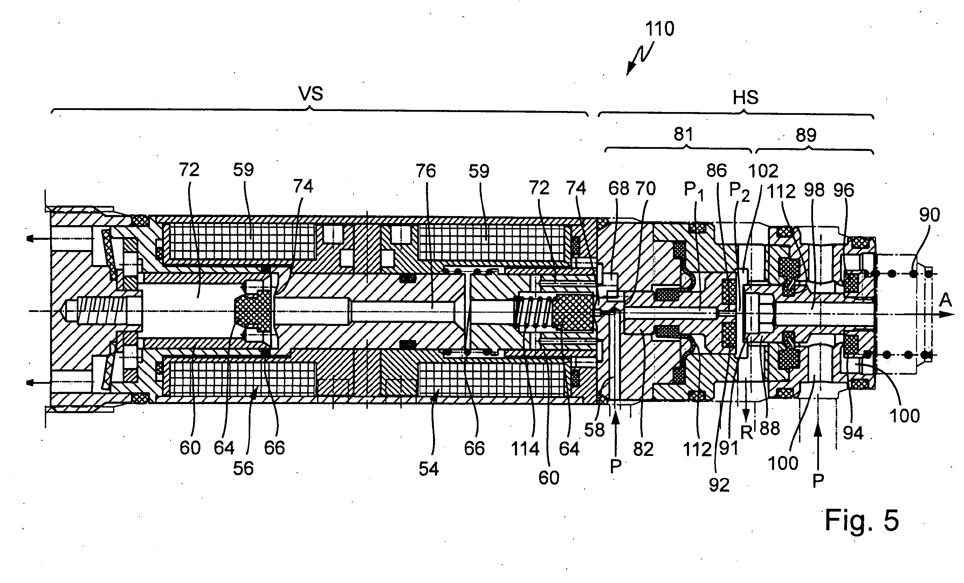

Die in der Figur 5 gezeigte weitere Ausführungsform einer erfindungsgemäßen Pneumatikregeleinrichtung 110 entspricht in der Funktionsweise der Einrichtung 50 gemäß den Figuren 3 - 4, wobei entsprechende Bauteile mit entsprechenden Bezugszeichen versehen sind.

Wesentlicher Unterschied der Einrichtung 110 gegenüber der Einrichtung 50 ist, dass die Einrichtung 110 eine Membrandichtung 112 zwischen dem Steuerkolben 82 und dem Gehäuse 52 sowie zwischen dem Hauptstufenkolben 88 und dem Gehäuse 52 aufweist, wodurch ein Luftaustritt zwischen dem Steuerkolben 82 beziehungsweise dem Hauptstufenkolben 88 und dem Gehäuse 52 auf effektive Art und Weise unterbunden wird.

Das Einlassventil 54 sieht bei der Ausführungsform gemäß Figur 5 ein zusätzliches Federelement 114 vor, mit dem beim Anschlagen des Dichtelements 64 gegen den Ventilsitz 74 entstehenden Druckstöße abgefedert werden.

**Patentansprüche**

1. Pneumatikregeleinrichtung (10, 50, 110) zur Bereitstellung eines vorgebbaren Ansteuerluftdrucks ($p_{sol1}$) in einer zu einem Verbraucher (A) führenden Verbraucherleitung (16, 99), mit einer Vorstufe (VS), die ein an eine Versorgungsleitung (P, 58) anschließbares, ansteuerbares Vorstufeneinlassventil (12, 54) zur Belüftung der Verbraucherleitung (16) und ein zwischen der Verbraucherleitung (16) und einer Entlüftung (R) liegendes, ansteuerbares Vorstufenablassventil (14, 56) aufweist, mit einer in der Verbraucherleitung (16, 99) vorgesehenen Drosselstelle (18, 86), und mit einer Hauptstufe (HS), umfassend ein Hauptstufeneinlassventil (20, 89) und ein Hauptstufenablassventil (22, 81), die beide in Abhängigkeit eines aus der Differenz zwischen dem der Drosselstelle (18, 86) vorgeordneten Luftdruck ($p_1$) und dem der Drosselstelle (18, 86) nachgeordneten Luftdruck ($p_2$) gebildeten Steuerdrucks ($p_S$) druckansteuerbar derart ausgebildet sind, dass zum einen das Hauptstufeneinlassventil (20, 80) während einer Druckluftzufuhr zum Verbraucher (A) bei Überschreiten eines ersten Schwellwerts ($p_{s1}$) des Steuerdrucks ($p_S$) aus einer geschlossenen Normalstellung in eine Schnellbelüftungsstellung schaltet, in der die Versorgungsleitung (P, 58) unter Umgehung der Drosselstelle (18, 86) mit der Verbraucherleitung (16, 99) verbunden ist, wobei aufgrund des durch die Schnellbelüftung stattfindenden Druckausgleichs bei Unterschreiten des ersten Schwellwerts ($p_{s1}$) oder eines anderen Schwellwerts das Hauptstufeneinlassventil (20, 89) wieder schließt dass zum anderen das Hauptstufenablassventil (22, 81) während einer Druckluftabfuhr vom Verbraucher (A) bei Unterschreiten eines zweiten Schwellwerts ($p_{S2}$) des Steuerdrucks ($p_S$) aus einer geschlossenen Normalstellung in eine Schnellentlüftungsstellung schaltet, in der die Verbraucherleitung (16, 99) unter Umgehung der Drosselstelle (18, 86) mit der Entlüftung (R) verbunden ist, wobei aufgrund des durch die Schnellentlüftung stattfindenden Druckausgleichs bei Überschreiten des zweiten Schwellwerts ($p_{s2}$) oder eines anderen Schwellwerts das Hauptstufenablassventil (22, 81) wieder schließt.

2. Einrichtung (10, 50, 110) nach Anspruch 1, **dadurch gekennzeichnet, dass** das Hauptstufeneinlassventil (20, 89) zu dessen Drucksteuerung einen beidseitig druckbeaufschlagbaren Hauptstufenkolben (88) aufweist, der eine dem der Drosselstelle (18, 86) vorgeordneten Luftdruck ($p_1$) zugeordnete erste Steuerfläche (F3) und eine dem der Drosselstelle (18, 86) nachgeordneten Luftdruck ($p_2$) zugeordnete, ausgebildete zweite Steuerfläche (F4) aufweist, wobei ein den Hauptstufenkolben (88) mittelbar oder unmittelbar in Richtung der ersten Steuerfläche beaufschlagendes Federelement (90, 24) derart vorgesehen ist, dass der erster Schwellwert ($p_{s1}$) abhängig vom Quotienten der beiden Steuerflächen (F3/F4) und der Federkraft (Fs) des Federelements (90, 24) ist.

3. Einrichtung (10, 50, 110) nach Anspruch 1 oder 2, **dadurch gekennzeichnet, dass** das Hauptstufenablassventil (22, 81) zu dessen Drucksteuerung einen beidseitig druckbeaufschlagbaren Steuerkolben (82) aufweist, der eine dem der Drosselstelle (18, 86) vorgeordneten Luftdruck ($p_1$) zugeordnete, einen Steuerdruckraum (70) begrenzende erste Steuerfläche (F1) und eine dem der Drosselstelle (18, 86) nachgeordneten Luftdruck ($p_2$) zugeordnete, kleiner als die erste Steuerfläche (F1) ausgebildete zweite Steuerfläche (F2) aufweist, wobei der zweite Schwellwert ($p_{S2}$) abhängig vom Quotienten der beiden Steuerflächen (F1, F2) ist.

4. Einrichtung (10, 50, 110) nach Anspruch 3, **dadurch gekennzeichnet, dass** die Differenz der beiden für den Steuerkolben (82) maßgeblichen Steuerflächen ($F_1$, $F_2$) kleiner oder gleich ist als der Quotient aus der Federkraft des Federelements (24, 90) und des maximal zulässigen Verbraucherdrucks ($p_{max}$).

5. Einrichtung (10, 50, 110) nach Anspruch 1, 2 oder 3, **dadurch gekennzeichnet, dass** eine elektronische Steuereinheit (30) vorgesehen ist, die in Abhängigkeit des jeweils vorgegebenen Ansteuerluftdrucks ($p_{soll}$) und des der Drosselstelle nachgeordneten Verbraucherleitungsdruck ($P_2$) das Vorstufeneinlassventil (12, 54) und das Vorstufenablassventil (14, 56) ansteuert.

6. Einrichtung (10, 50, 110) nach wenigstens einem der vorhergehenden Ansprüche, **dadurch gekennzeichnet, dass** der Steuerkolben (82) und der Hauptstufenkolben (88) in einem gemeinsamen Zylinderraum (90) axial hintereinander angeordnet sind, wobei der Steuerkolben (82) einen zwischen seinen beiden Steuerflächen ($F_1$, $F_2$) die Drosselstelle (86) bildenden Durchbruch aufweist und wobei der Hauptstufenkolben (88), der zur Verbindung mit der Verbraucherleitung (16) hohl ausgebildet ist, vom Federelement (10) axial gegen den Steuerkolben (82) beaufschlagt derart angeordnet ist, dass er den Hauptstufenkolben (88) bei Überschreiten des ersten Schwellwerts ($p_{s1}$) entgegen der Federkraft ($F_S$) des Federelements (90) aus der Normalstellung in die Schnellbelüftungsstellung betätigt.

7. Einrichtung (50, 110) nach Anspruch 6, **dadurch gekennzeichnet, dass** der Hauptstufenkolben (88) in der Schnellbelüftungsstellung einen in der Normalstellung geschlossenen, zum Verbraucher (A) führenden und die Drosselstelle (86) umgehenden Verbraucherleitungsstrang (100) öffnet.

8. Einrichtung (50, 110) nach Anspruch 6 oder 7, **dadurch gekennzeichnet, dass** der Steuerkolben (82) bei Unterschreiten des zweiten Schwellwerts ($p_{S2}$) sich in die dem Steuerdruckraum (70) zugewandte Richtung in die Schnellentlüftungsstellung bewegt, wobei ein Anschlag (98) vorgesehen ist, der die Bewegung des Hauptstufenkolbens (88) in Richtung zum Steuerdruckraum (70) hin derart begrenzt, dass der Steuerkolben (82) vom Hauptstufenkolben (88) abhebt und Druckluft zwischen dem Steuerkolben (82) und dem Hauptstufenkolben (88) aus dem Innenraum des Hauptstufenkolbens (88) in eine Entlüftungsleitung (102, R) abströmen kann.

9. Einrichtung (50, 110) nach Anspruch 8, **dadurch gekennzeichnet, dass** der Verbraucherleitungsstrang (110) aufgrund des Anliegens des Hauptstufenkolbens (88) am Anschlag (98) verschlossen ist und beim Abheben des Hauptstufenkolbens (88) vom Anschlag (98) geöffnet ist.

10. Einrichtung (50, 110) nach wenigstens einem der Ansprüche 6 bis 9, **dadurch gekennzeichnet, dass** zur wenigstens weitgehenden luftdichten Abdichtung zwischen dem Steuerkolben (82) und der Oberfläche des Zylinderraums (80) wenigstens eine Ring- und/oder Membrandichtung (112) vorgesehen ist.

11. Einrichtung (10, 50, 110) nach wenigstens einem der vorhergehenden Ansprüche, **dadurch gekennzeichnet, dass** das Vorstufeneinlassventil (12, 54) und das Vorstufenablassventil (14, 56) auf der dem Steuerdruckraum (70) zugewandten Seite axial neben dem Steuerkolben (82) und dem Hauptstufenkolben (88) angeordnet sind.

12. Einrichtung (10, 50, 110) nach wenigstens einem der vorhergehenden Ansprüche, **dadurch gekennzeichnet, dass** das Vorstufeneinlassventil (12, 54) und/oder das Vorstufenablassventil (14, 56) als gepulst ansteuerbare Ventile ausgebildet sind.

13. Einrichtung (10, 50, 110) nach wenigstens einem der vorhergehenden Ansprüche, dass zumindest das Vorstufenablassventil (14, 56) als elektrisch betätigbares Druckbegrenzungsventil zur Begrenzung eines maximal zulässigen Verbraucherleitungsdrucks ($p_{max}$) ausgebildet ist.

14. Verfahren zum Betreiben einer Pneumatikregeleinrichtung (10, 50, 110) nach wenigstens einem der vorhergehenden Ansprüche in einem Normalbetriebsmodus, in dem das Vorstufeneinlassventil (12, 54) und/oder das Vorstufenablassventil (14, 56) in Abhängigkeit vom vorgebebenen Ansteuerluftdruck ($p_{soll}$) und dem der Drosselstelle (86) nachgeordneten, in der Verbraucherleitung (16, 99) herrschenden Verbraucherleitungsdruck ($p_2$) angesteuert wird, **gekennzeichnet durch** folgende Schritte:

    - zur Druckluftzufuhr zum Verbraucher wird das Vorstufeneinlassventil (12, 54) bei geschlossenem Vorstufenablassventil (12, 56) angesteuert,
    - zur Druckluftabfuhr vom Verbraucher wird das Vorstufenablassventil (14, 56) bei geschlossenem Vorstufeneinlassventil (12, 54) angesteuert,
    - bei Überschreiten des ersten Schwellwerts ($p_{s1}$) des Steuerdrucks wird zur Schnellbelüftung der Verbraucherleitung (16, 99) die Versorgungsleitung (P, 58) unter Umgehung der Drosselstelle (18, 86) mit der Verbraucherleitung (16, 99) verbunden, und
    - bei Unterschreiten des zweiten Schwellwerts ($p_{s2}$) des Steuerdrucks wird zur Schnellentlüftung der Verbraucherleitung (16, 99) die Verbraucherleitung (16, 99) unter Umgehung der Drosselstelle (18, 86) mit der Entlüftung (P) verbunden.

Fig. 1

VS      HS

81      89

72   64   74   76   72   62   64   74   68   52     80     R   102    98   96

62

$P_2$

84

A

78

94

90

99

50

56   59   66     54   66   59   60   $P_1$   70   86   82   58    92 / 88   100    98   94   100

52                               91

P

Fig. 2

EP 1 970 789 A2

Fig. 3

R

70    100

56    54    82    88    100

99

A

P

EP 1 970 789 A2

12

Fig. 4

EP 1 970 789 A2

Fig. 5

VS  HS

110

81  89

72  59  74  76  59  72  74  68 70  P₁  86  102  112  98  96  90

A

60  64  66  54  66  114  64  58  82  112  91  100  94  100

56  60  P  92  R  88  P

EP 1 970 789 A2